# EUROPÄISCHE PATENTSCHRIFT

(11) **EP 2 985 116 B1**
(45) Veröffentlichungstag und Bekanntmachung des Hinweises auf die Patenterteilung: **14.02.2018**
(21) Anmeldenummer: 14004063.5
(22) Anmeldetag: 02.12.2014
(51) Int. Cl.: B24C 1/00, C03B 18/02, C03B 35/16

(54) **Reinigungsvorrichtung und Reinigungsverfahren für Transportrollen in einem Rollenkühlofen einer Anlage zum Herstellen von Floatglas**
Purification device and method of cleaning transport rollers in a roller cooling oven of a facility for producing float glass
Dispositif de nettoyage et procédé de nettoyage de rouleaux de transport dans un four à refroidisseur à rouleaux d'une installation de production de verre flotté

(30) Priorität: 16.08.2014 DE 202014006663 U
(43) Veröffentlichungstag der Anmeldung: 17.02.2016
(73) Patentinhaber: Wulf, Winfried, 52134 Herzogenrath (DE); Reiter, Stefan, 52070 Aachen (DE); Zinken, Jeroen, 52066 Aachen (DE)
(72) Erfinder: Wulf, Winfried, 52134 Herzogenrath (DE); Reiter, Stefan, 52070 Aachen (DE); Zinken, Jeroen, 52066 Aachen (DE)
(74) Vertreter: Tilmann, Max Wilhelm

(56) Entgegenhaltungen:
- WO-A1-02/16081
- DE-A1-102006 027 944
- DE-A1-102009 043 033
- US-A- 3 337 320
- US-A- 3 877 919
- US-A- 4 042 364
- US-A- 6 113 475

## Beschreibung

Die Erfindung betrifft eine Anlage zum Herstellen von Floatglas nach dem Oberbegriff des Anspruchs 1 sowie ein Verfahren zum Herstellen von Floatglas mit einer solchen Anlage.

Floatglas ist Flachglas, welches in dem sogenannten "Floatprozess" oder "Floatglasverfahren" hergestellt wird. Das Herstellungsverfahren von Floatglas ist ein kontinuierlicher Prozess, bei dem eine teigig-flüssige Glasschmelze auf ein längliches Bad aus flüssigem Zinn geleitet wird und sich dort wie ein Film gleichmäßig ausbreitet. Die Oberflächenspannung des Zinns und des flüssigen Glases führen bei diesem Herstellungsprozess zu einer sehr glatten Oberfläche des Glases. Das am kühleren Ende des Zinnbads erstarrte, allerdings noch ca. 800°C warme Glas wird fortlaufend abgezogen und durchläuft im Anschluss an das Zinnbad einen Kühlofen, in welchem es verspannungsfrei heruntergekühlt wird. In dem Kühlofen sind Transportrollen vorgesehen, über die das Glas geführt wird und von denen das Glas abgestützt wird. Dabei wird das Glas kontinuierlich über die Transportrollen durch den Rollenkühlofen gefördert. Entsprechend unterliegen die Transportrollen einer kontinuierlichen Rotation um ihre Längsachse und werden in der Regel hierzu angetrieben.
Transportrollen der Rollenkühlöfen einer Anlage zum Herstellen von Floatglas können verschmutzen. In einigen Floatglasherstellungsverfahren ist es bekannt, Schwefeldioxid auf die Transportrollen aufzublasen. Dadurch wird eine Sulfatschicht auf der Transportrolle gebildet. Das Floatglas kommt mit dieser, die Außenoberfläche der Transportrolle bildenden Sulfatschicht in Kontakt. Je nach Prozessführung wird Schwefeldioxid kontinuierlich oder intervallweise oder situationsbedingt auf die Transportrollen gesprüht. In der Mehrzahl der Verfahrensführungsarten kommt es mit zunehmender Dauer der Verfahrensführung zu einem erheblichen Anwachsen der Sulfatschicht auf den Transportrollen. Es besteht ein Interesse daran, diese Sulfatschicht zu entfernen, bzw. zu reduzieren. Ferner besteht ein Interesse daran, Verschmutzungen von der Transportrollenoberfläche zu entfernen, beispielsweise solche, die nicht durch die Schwefeldioxidauftragung entstanden sind, oder aber Verschmutzungen bei Verfahrensführungen, bei denen kein Schwefeldioxid auf die Transportrollen aufgesprüht wird.
Aus dem Stand der Technik ist es bekannt, Transportrollen aus dem Rollenkühlofen einer Anlage zum Herstellen von Floatglas auszubauen und außerhalb des Rollenkühlofens zu reinigen. Dies bedingt jedoch, dass die Floatglasproduktion unterbrochen werden muss.

Aus US 3,337,320 sind eine Reinigungsvorrichtung und ein Reinigungsverfahren für Transportrollen in einem Rollenkühlofen einer Anlage zum Herstellen von Floatglas bekannt. Vor diesem Hintergrund ist es Aufgabe der Erfindung, eine Reinigungsvorrichtung und ein Reinigungsverfahren für Transportrollen in einem Rollenkühlofen einer Anlage zum Herstellen von Floatglas vorzuschlagen, die auch bei fortgesetzter Herstellung von Floatglas ein Reinigen der Transportrollen in dem Rollenkühlofen erlauben. Diese Aufgabe wird durch die Anlage nach Anspruch 1 und das Verfahren nach Anspruch 7 gelöst. Vorteilhafte Ausführungsformen sind in den Unteransprüchen und der hiernach folgenden Beschreibung wiedergegeben.
Die Erfindung geht von dem Grundgedanken aus, zum Reinigen der Transportrollen Trockeneispellets und/oder Trockeneisschnee einzusetzen. Erfindungsgemäß weist die Reinigungsvorrichtung eine Düse zum Ausbringen von Trockeneispellets und/oder Trockeneisschnee auf. Das erfindungsgemäße Verfahren sieht vor, dass ein Strahl von Trockeneispellets und/oder Trockeneisschnee mittels einer Düse erzeugt wird und der Strahl auf die Oberfläche der Transportrolle gerichtet wird. Es hat sich gezeigt, dass mit einem solchen Strahl von Trockeneispellets und/oder Trockeneisschnee Verunreinigungen auf der Oberfläche von Transportrollen abgestrahlt werden können.

Das durch das Ausbringen von Trockeneispellets und/oder Trockeneisschnee in den Rollenkühlofen eingebrachte Kohlendioxid hat sich als für die Kühlung des Floatglases im Rollenkühlofen nicht nachteilhaft erwiesen. Ferner hat sich gezeigt, dass durch das Aufstrahlen eines Trockeneispellet-Strahls und/oder Trockeneisschnee-Strahls zwar Verunreinigungen von der Oberfläche der Transportrolle abplatzen, die Oberfläche der Transportrollen nicht oder nur minimal beschädigt wird.

Die erfindungsgemäße Reinigungsvorrichtung weist insbesondere bevorzugt eine Düse auf, insbesondere bevorzugt eine einzige Düse pro Lanze. Ebenso wird gemäß einer bevorzugten Ausführungsform das Reinigungsverfahren mit dem Ausbringen eines Strahls von Trockeneispellets und/oder Trockeneisschnee aus einer, insbesondere bevorzugt einer einzigen Düse durchgeführt. Das Verwenden einer einzigen Düse bietet den Vorteil, dass eine leistungsärmere Fördervorrichtung für die Trockeneispellets, bzw. den Trockeneisschnee, beispielsweise ein leistungsärmerer Kompressor verwendet werden kann, als wenn mehrere Düsen über eine gemeinsame Zuführleitung und damit eine gemeinsame Fördervorrichtung mit Trockeneispellets und/oder Trockeneisschnee versorgt werden müssen. Mit der Anzahl der über eine gemeinsame Förderleitung versorgten Düsen steigt der Druckverlust, was dazu führt, dass die Fördervorrichtung beispielsweise der Kompressor am Anfang der Förderleitung einen hohen Druck erzeugen muss, um an allen Düsen noch einen hinreichend großen Druck zu gewährleisten. Außerdem wird durch den Einsatz nur einer einzigen Düse die Menge des in den Rollenkühlofen eingebrachten Kohlendioxids pro Zeiteinheit beschränkt. Das kann Vorteile bieten, insbesondere bevorzugt kann dadurch vermieden werden, dass ein Überdruck in dem Rollenkühlofen erzeugt wird. Zugleich hängt aber auch die Zeit für die Reinigung einer Transportrolle von der Anzahl der Düsen ab. Je mehr Düsen verwendet werden, desto mehr Oberflächenbereiche einer Transportrolle können gleichzeitig gereinigt werden. Insofern sind auch Ausführungsformen denkbar, bei denen die Reinigungsvorrichtung eine Mehrzahl von Düsen aufweist. Es sind Bauformen denkbar, bei denen eine Reinigungsvorrichtung mit mehreren Düsen Düsen aufweist, die parallel zueinander stehende Strahlen von Trockeneispellets und/oder Trockeneisschnee erzeugen. Derartige Reinigungsvorrichtungen werden beispielsweise dazu eingesetzt, um die Oberfläche einer einzigen Transportrolle zu reinigen. Es sind aber auch Ausführungsformen der Reinigungsvorrichtung denkbar, bei denen mehrere Düsen vorgesehen sind und die Düsen derart angeordnet sind, dass die von ihnen erzeugten Strahlen von Trockeneispellets und/oder Trockeneisschnee in einem Winkel zueinander stehen. Derartige Reinigungsvorrichtungen können beispielsweise dazu eingesetzt werden, gleichzeitig Oberflächenabschnitte von nebeneinander angeordneten Transportrollen zu reinigen.

Die Effektivität der Reinigung der Oberfläche der Transportrolle hängt zum einen von dem Impuls ab, mit dem die Trockeneispellets, bzw. der Trockeneisschnee auf die Oberfläche der Transportrolle auftrifft und somit von dem Druck innerhalb des Trockeneispellet-Strahls, bzw. des Trockeneisschnee-Strahls. Es werden deshalb Düsen bevorzugt, die den Trockeneispellet-Strahl, bzw. den Trockeneisschnee-Strahl fokussieren, weil dadurch der Impuls im Punkt des Auftreffens erhöht wird. Andererseits hängt die Zeit, die für die Reinigung der gesamten Oberfläche einer Transportrolle benötigt wird, von dem Querschnitt des Trockeneispellet-Strahls, bzw. des Trockeneisschnee-Strahls im Auftreffen auf die Oberfläche der Transportrolle ab. Je größer dieser Querschnitt ist, desto größer der Bereich der Transportrolle, der pro Zeiteinheit gereinigt werden kann. Je nach Leistung der Fördervorrichtung für die Trockeneispellets, bzw. den Trockeneisschnee, mit der die Trockeneispellets, bzw. der Trockeneisschnee zu der Düse gefördert werden, können deshalb auch Düsen bevorzugt werden, die einen sich verbreiternden Strahl und damit eine möglichst große Oberfläche des Auftreffens erzeugen können. In einer bevorzugten Ausführungsform hat der aus der Düse austretende Strahl einen Streuwinkel zwischen 30 und 90°.

Die mit der erfindungsgemäßen Reinigungsvorrichtung und gemäß dem erfindungsgemäßen Reinigungsverfahren auszubringenden Trockeneispellets sind insbesondere bevorzugt zylindrische Körper mit einem Durchmesser von ca. 3 mm und einer Länge zwischen 5 mm und 30 mm. Die Trockeneispellets können dadurch hergestellt werden, dass über eine Zweistoffringdüse flüssiges Kohlendioxid einem Druckluftstrahl zugeführt wird und zu einem Schnee/Gas-Gemisch in Form von Schneepartikeln entspannt. Durch einen Ring- oder Mantelstrahl, bestehend aus überschallschneller Druckluft, die über die Ringdüse erzeugt wird, werden die CO₂-Schneekristalle gebündelt und auf teilweise mehrfache Überschallgeschwindigkeit beschleunigt.

In einer bevorzugten Ausführungsform weist die erfindungsgemäße Reinigungsvorrichtung einen Vorratsbehälter für Trockeneispellets und/oder Trockeneisschnee auf. In einer besonders bevorzugten Ausführungsform ist eine Fördervorrichtung als Teil der Reinigungsvorrichtung vorgesehen, die Trockeneispellets und/oder Trockeneisschnee aus dem Vorratsbehälter zu der Düse fördert und aus der Düse ausbringt. Eine derartige Fördervorrichtung kann ein Kompressor sein. Insbesondere bevorzugt können die Trockeneispellets aus einem Vorratsbehälter über eine Förderschnecke oder eine Dosierscheibe in einen Luftstrom gegeben und auf etwa Schallgeschwindigkeit beschleunigt werden, um dann über einen Strahlschlauch und eine den jeweiligen Anforderungen angepasste Düse auf das zu reinigende Objekt aufgestrahlt zu werden.

Es sind Bauformen der erfindungsgemäßen Reinigungsvorrichtung denkbar, bei denen ein oder mehrere Vorratsbehälter für Trockeneispellets eingesetzt werden. Diese werden zum Durchführen des Reinigungsverfahrens mit separat hergestellten Trockeneispellets bestückt. Es sind aber auch Bauformen der erfindungsgemäßen Reinigungsvorrichtung möglich, bei denen diese eine Vorrichtung zum Erzeugen von Trockeneispellets und/oder Trockeneisschnee aufweist. Dieser Vorrichtung zum Erzeugen von Trockeneispellets und/oder Trockeneisschnee kann Kohlendioxid gasförmig zugeführt werden. Aus dem gasförmigen Kohlendioxid werden mit der Vorrichtung zum Erzeugen von Trockeneispellets und/oder Trockeneisschnee die Trockeneispellets und/oder der Trockeneisschnee hergestellt. Die so hergestellten Trockeneispellets und/oder der so hergestellte Trockeneisschnee kann entweder unmittelbar nach dem Herstellen zur Düse zum Ausbringen von Trockeneispellets und/oder Trockeneisschnee gefördert werden. Alternativ sind Ausführungsformen denkbar, bei denen von der Vorrichtung zum Erzeugen von Trockeneispellets und/oder Trockeneisschnee eine Leitung zu einem Vorratsbehälter für Trockeneispellets und/oder Trockeneisschnee führt, sodass die in der Vorrichtung zum Erzeugen von Trockeneispellets und/oder Trockeneisschnee erzeugten Trockeneispellets, bzw. der erzeugte Trockeneisschnee zunächst in den Vorratsbehälter gefördert wird und von dort aus zur Düse gefördert wird.

In einer bevorzugten Ausführungsform ist die Düse zum Ausbringen von Trockeneispellets und/oder Trockeneisschnee an einer Lanze (einem Fahrschlitten) vorgesehen. Das Vorsehen einer Lanze erlaubt es dem Bediener der Reinigungsvorrichtung, die Düse zielgerichtet in den Rollenkühlofen einzubringen. Die Transportrollen in einem Rollenkühlofen einer Anlage zum Herstellen von Floatglas können mehrere Meter lang sein, beispielsweise über 4,5 m lang oder sogar auch 6 m lang. Durch den Einsatz einer Lanze, an der die Düse zum Ausbringen von Trockeneispellets und/oder Trockeneisschnee vorgesehen ist, wird es dem Bediener möglich, auch von seinem Standort entfernter liegende Oberflächenbereiche der Transportrolle zu reinigen. Beispielsweise kann die Lanze von einer Seite in den Rollenkühlofen eingeführt werden und die Reinigung der gesamten Oberfläche der Transportrolle von dieser Seite aus durchgeführt werden. Rollenkühlöfen weisen häufig eine frei Seite und eine Seite, an der die Antriebe der Transportrollen angeordnet sind, auf. In einer besonders bevorzugten Ausführungsform ist die Reinigungsvorrichtung so ausgestaltet, dass das erfindungsgemäße Reinigungsverfahren von einer Seite aus, vorzugsweise von der den Antrieben gegenüberliegenden Seite aus durchgeführt wird. Dieses Ziel wird insbesondere dadurch erreicht, dass die Düse zum Ausbringen von Trockeneispellets und/oder Trockeneisschnee an einer Lanze vorgesehen ist.

In einer besonders bevorzugten Ausführungsform ist innerhalb der Lanze ein zu der Düse führender Kanal vorgesehen, durch den die Trockeneispellets und/oder der Trockeneisschnee zu der Düse gefördert werden kann. Dies vereinfacht zum einen das Handhaben der Reinigungsvorrichtung. Zum Reinigung der Transportrolle, auch bei entfernt liegenden Oberflächenbereichen, ist für den Bediener allein das Handhaben der Lanze notwendig. In alternativen Ausführungsformen denkbare, separat zur Lanze ausgeführte Zuförderleitungen zu der Düse, können entfallen, wenn ein zu der Düse führender Kanal innerhalb der Lanze ausgebildet ist. Ferner bietet das Ausführen des zu der Düse führenden Kanals innerhalb der Lanze den Vorteil, dass die Lanze durch die durch sie hindurchströmenden Trockeneispellets und/oder den Trockeneisschnee von innen gekühlt wird. Bedenkt man, dass im Rollenkühlofen Temperaturen in der Größenordnung von 600°C herrschen, so kann durch ein internes Kühlen verhindert werden, dass die Lanze schmilzt, bzw. ungewünschte Gefügeänderungen eintreten. Insbesondere kann eine von innen gekühlte Lanze aus einem minderwertigen Material und deswegen kostengünstiger hergestellt werden, als wenn das Lanzenmaterial so gewählt werden müsste, dass es dauerhaft Temperaturen im Bereich von 600°C standhalten kann.

Die Lanze ist insbesondere bevorzugt ein Langkörper, der um seine Längsachse symmetrisch aufgebaut ist. Insbesondere bevorzugt ist der Querschnitt der Lanze senkrecht zu ihrer Längsachse kreisförmig, bzw. kreisringförmig, bzw. ellipsenförmig, bzw. ellipsenringförmig. Die Lanze ist vorzugsweise aus Metall hergestellt.

In einer bevorzugten Ausführungsform wird die Düse an einem Adapter an der Lanze befestigt. Beispielsweise kann eine einen innenliegenden Kanal aufweisende Lanze eine seitliche Öffnung aufweisen, an die ein Adapter in Form eines Rohrstücks mit einem Außen- oder einem Innengewinde befestigt wird, beispielsweise angeschweißt wird. Die Düse kann auf dieses Außen-, bzw. Innengewinde aufgeschraubt werden. Dieser Aufbau ermöglicht den Einsatz verschiedener Düsengeometrien. So kann beispielsweise durch das Einstellen der Größe der Düsenöffnung oder durch das Einstellen der Geometrie der Düsenöffnung ein für den jeweiligen Einsatzzweck bestimmter Strahl von Trockeneispellets und/oder Trockeneisschnee eingestellt werden. So ist es denkbar, dass der Strahl für gewisse Anwendungsgebiete einen höheren Druck aufweisen muss, als für andere Anwendungsgebiete. Durch Verringern der Querschnittsöffnung der Düse kann der Druck des Strahls erhöht werden. So kann bei gleichbleibender Fördervorrichtung innerhalb der Reinigungsvorrichtung allein durch Einstellen der Düsengeometrie der Druck des ausgebrachten Strahls von Trockeneispellets, bzw. Trockeneisschnee eingestellt werden. Ebenso ermöglicht es das Aufschrauben der Düse auf einen Adapter an der Lanze, die Düsenöffnung näher oder weiter entfernt von der Längsmittelachse der Lanze anzuordnen. Wird eine Düse verwendet, die nur eine geringe Längserstreckung hat, so befindet sich bei auf den Adapter aufgeschraubter Düse, die Düsenöffnung relativ nah an der Längsmittelachse der Lanze. Wird die Düse jedoch als Rohrkörper mit einer gewissen Längserstreckung ausgeführt, so ändert sich damit die Anordnung der Düsenöffnung im Verhältnis zu der soeben beschriebenen Ausführungsform. Bei dieser Ausführungsform mit rohrartiger Düse ist die Düsenöffnung weiter entfernt von der Längsmittelachse der Lanze. Im Rahmen des erfindungsgemäßen Reinigungsverfahrens ist es denkbar, von einer Öffnung des Rollenkühlofens aus mit einer eingeschobenen Lanze nacheinander mehrere Transportrollen zu reinigen. Nach dem Einschieben durch die eine Öffnung des Rollenkühlofens befindet sich die Lanze meist näher an der einen Transportrolle, als an einer anderen Transportrolle. Hier kann es Vorzüge bringen, die eine, nähere Transportrolle mit einer kurzen Düse zu reinigen, bei der die Düsenaustrittsöffnung also näher an der Längsmittelachse angeordnet ist, während es für das Reinigen der entfernter liegenden Transportrolle zweckmäßig sein kann, eine eher rohrförmige Düse an der Lanze zu befestigen, sodass die Düsenaustrittsöffnung weiter von der Längsmittelachse der Lanze entfernt und damit näher an der Oberfläche der entfernter liegenden Transportrolle angeordnet ist.

In einer bevorzugten Ausführungsform ist die Lanze auf einer Führungsschiene abgestützt. Es ist zwar denkbar, dass ein Bediener der Reinigungsvorrichtung die Lanze hält und auf diesem Wege die Oberfläche der Transportrollen reinigt. Ein derartiges Vorgehen wird sich jedoch meist nur für das partielle Reinigen von Oberflächenbereichen der Transportrolle eignen. Meist wird es dem Bediener schwerfallen, die Lanze über einen längeren Zeitraum zu halten und präzise an die jeweils zu reinigende Oberfläche heranzuführen. Deshalb bietet es Vorzüge, wenn die Lanze auf einer Führungsschiene abgestützt wird. Diese Führungsschiene kann fest in dem Rollenkühlofen verbaut sein. Beispielsweise als eine Art Brücke, die von der einen Seite des Rollenkühlofens zur anderen, antriebsseitigen Seite des Rollenkühlofens führt, insbesondere bevorzugt parallel zu der jeweiligen zu reinigenden Transportrolle. Eine derartige Führungsschiene kann fest in dem Rollenkühlofen installiert sein. Das heißt, dass eine derartige Führungsschiene bei der Planung eines neuen Rollenkühlofens oder nachträglich zu jeder Transportrolle, bzw. zu jeder Gruppe von Transportrollen, die von einer Führungsschiene aus gereinigt werden können, eingebaut wird. Das bietet den Vorteil, dass der Bediener der Reinigungsvorrichtung die Führungsschiene bereits im Rollenkühlofen vorfindet und sich um deren Positionierung nicht kümmern muss. Ebenso besteht die Möglichkeit, dass die Führungsschiene jeweils nur für den jeweils durchzuführenden Reinigungsvorgang in den Rollenkühlofen eingebracht wird, beispielsweise an Rahmenteilen aufgelegt, bzw. an denen befestigt wird. Ganz besonders bevorzugt werden jedoch Bauformen der erfindungsgemäßen Reinigungsvorrichtung, bei der eine die Lanze abstützende Führungsschiene keinen Kontakt zu Bauelementen des Rollenkühlofens hat. Dies wird beispielsweise erreicht, wenn die Führungsschiene unmittelbar oder mittelbar mit einer außerhalb des Rollenkühlofens angeordneten Basis verbunden ist und über diese Basis beispielsweise auskragt. In einer solchen Ausführungsform wird die Führungsschiene in dem Bereich, der in den Rollenkühlofen eingeführt werden soll, freischwebend an der außerhalb des Rollenkühlofens vorgesehenen Basis gehalten. Dadurch wird die erfindungsgemäße Reinigungsvorrichtung unabhängig von der jeweiligen Konstruktion des Rollenkühlofens. Die in der bevorzugten Ausführungsform zu verwendenden Führungsschienen müssen nicht jeweils auf bestimmte Einbaubedingungen des jeweiligen Rollenkühlofens abgestimmt werden.

In einer bevorzugten Ausführungsform ist die Lanze derart ausgeführt, dass sie sich relativ zur Führungsschiene entlang der Längsachse der Führungsschiene bewegen kann. Zwar sind Ausführungsformen denkbar, bei denen die Lanze selbst mit einer außerhalb des Rollenkühlofens angeordneten Basis verbunden ist und über diese hinaus in den Rollenkühlofen hinein auskragt oder beispielsweise von einem außerhalb des Rollenkühlofens stehenden Bediener gehalten wird. Je nach Bauform der Lanze ist jedoch damit zu rechnen, dass sich eine sich über die gesamte Länge einer Transportrolle erstreckende Lanze, wenn sie nur an einem Ende gehalten wird, durchbiegt. Dadurch wird es schwierig, die in einer bevorzugten Ausführungsform am Ende der Lanze angeordnete Düse zielgerichtet und in die Nähe des zu reinigenden Oberflächenabschnitts zu bringen. Alternativ könnte die Lanze bei solchen Bauformen sehr starr ausgebildet werden. Dadurch würde sie jedoch sehr schwer werden. Außerdem würde die Kühlung einer solchen Lanze mit großer Wandstärke schwierig werden. Deshalb ist der hier beschriebenen Ausführungsform Vorzug zu geben, bei der eine Führungsschiene vorgesehen ist, an der sich die Lanze abstützt und entlang deren Längsachse sich die Lanze bewegen kann. Die Führungsschiene kann beispielsweise den gesamten Rollenkühlofen durchgreifen, sodass die Lanze in jeder Reinigungsposition an der Führungsschiene abgestützt werden kann. In alternativen Bauformen durchgreift die Führungsschiene zumindest 50 %, insbesondere bevorzugt 75 % der Breite des Rollenkühlofens, sodass eine zur Reinigung des entferntest liegenden Oberflächenabschnitts der Transportrolle gänzlich von der einen Seite in den Rollenkühlofen eingeführte Lanze nur über 50 %, bzw. über 25 % der Rollenkühlofenbreite freitragend ist. In einer bevorzugten Ausführungsform weist die Lanze an ihr befestigte Rollen und/oder weist die Führungsschiene an ihr befestigte Rollen auf, mittels derer die Lanze auf der Führungsschiene abrollen kann. Aufgrund der in dem Rollenkühlofen vorherrschenden Temperaturen in der Größenordnung von 600°C ist es jedoch auch denkbar, dass die Lagerung der Rollen nur schwer darstellbar wird. Deshalb kann die Lanze, bzw. kann die Führungsschiene in einer bevorzugten Ausführungsform Gleitstücke aufweisen, über die die Lanze relativ zur Führungsschiene gleiten kann. Diese Gleitstücke können entweder flächig ausgebildet sein, es sind aber besonders bevorzugt dreidimensional im Querschnitt, beispielsweise mit einer Hohlkehle ausgeführt, sodass die Bewegung der Lanze relativ zur Führungsschiene so geführt wird, dass sich die Lanze relativ zur Führungsschiene entlang der Längsachse der Führungsschiene bewegt. Beispielsweise kann die Führungsschiene in einer bevorzugten Ausführungsform über ihre gesamte Länge in ihrem Querschnitt senkrecht zu ihrer Längsachse mit einer Hohlkehle ausgeführt sein.

In einer bevorzugten Ausführungsform weist die Reinigungsvorrichtung zwei parallel zueinander verlaufende Führungsschienen auf. Diese sind vorzugsweise so weit voneinander beabstandet, dass jeweils eine der beiden Führungsschienen zwischen zwei nacheinander angeordneten Transportrollen des Rollenkühlofens angeordnet werden können. Eine solche Bauform erlaubt es, mit einmal positionierten Führungsschienen drei Transportrollen zu reinigen. Es wird also möglich, von einer seitlichen Öffnung des Rollenkühlofens (meist einer mit einer Klappe verschlossenen Öffnung) aus drei nacheinander folgende Transportrollen zu reinigen. Zum Reinigen der in Durchlaufrichtung des Glases als erstes angeordneten Transportrolle wird die Lanze auf der in Durchlaufrichtung des Glases als erstes angeordneten Führungsschiene abgestützt. Die Lanze wird so geschwenkt, dass der aus ihrer Düse austretende Strahl aus Trockeneispellets und/oder Trockeneisschnee auf einen Oberflächenbereich der in Durchlaufrichtung des Glases als erstes angeordneten Transportrolle gerichtet wird. Durch Verschieben der Lanze in Längsrichtung der Führungsschiene können in Längsrichtung der Transportrolle nacheinander angeordnete Oberflächenbereich der Transportrolle gereinigt werden. Hierzu werden die Führungsschiene und die Transportrolle insbesondere bevorzugt parallel zueinander ausgerichtet. Die der ersten Transportrolle in Durchlaufrichtung des Glases nachfolgende zweite Transportrolle kann dadurch gereinigt werden, dass die Lanze nach wie vor auf der ersten Führungsschiene abgestützt wird, ihre Düse aber so verschwenkt wird, dass der von der Düse erzeugte Strahl aus Trockeneispellets und/oder Trockeneisschnee auf Oberflächenabschnitte der in Durchlaufrichtung des Glases als zweites angeordneten Transportrolle ausgerichtet wird. Zum Reinigen der in Durchlaufrichtung des Glases dritten Transportrolle wird die Lanze auf der in Durchlaufrichtung des Glases als zweites angeordneten Führungsschiene angeordnet. Die Düse der Lanze wird derart ausgerichtet, dass der von ihr erzeugte Stahl von Trockeneispellets und/oder Trockeneisschnee auf Oberflächenbereiche der in Durchlaufrichtung des Glases als drittes angeordneten Transportrolle ausgerichtet wird.

In einer bevorzugten Ausführungsform sind die erste Führungsschiene und die zweite Führungsschiene an einer Stelle oder an mehreren Stellen entlang der Längserstreckung der Führungsschiene miteinander verbunden. Dadurch können sich die beiden Führungsschienen aneinander abstützen und es entsteht eine stabilere, rahmenähnliche Konstruktion.

In einer bevorzugten Ausführungsform kann die Führungsschiene gekühlt sein, insbesondere bevorzugt über eine innenliegende Kühlmittelleitung. Bei einer bevorzugten Ausführungsform, bei der zwei Führungsschienen vorgesehen werden, die über Brücken miteinander verbunden werden, können diese Brücken dazu genutzt werden, einen Kühlmittelstrom von einem innenliegenden Kanal der einen Führungsschiene zu einem innenliegenden Kanal der anderen Führungsschiene zu führen und dadurch einen Kühlmittelkreislauf aufzubauen.

In einer bevorzugten Ausführungsform ist die Führungsschiene als Hohlprofil mit einer Öffnungsnut ausgeführt, die sich insbesondere bevorzugt entlang der gesamten Länge der Führungsschiene erstreckt. In einer bevorzugten Ausführungsform weist die Lanze ein Kopplungsstück (Gleitstück) auf, das die Öffnungsnut der Führungsschiene durchgreift. Ein in einer bevorzugten Ausführungsform vorgesehenes Kopfstück am Kopplungsstück ist größer ausgestaltet als die Öffnungsnut und im Inneren des Hohlprofils angeordnet. Das Kopfstück verhindert, dass das Kopplungsstück durch die Öffnungsnut herausgezogen werden kann. In einer bevorzugten Ausführungsform ist das Hohlprofil zumindest an einem Ende offen, so dass das Kopfstück an diesem Ende so in das Hohlprofil eingeführt werden kann, dass das Kopfstück in dem Hohlprofil angeordnet ist und ein zum Kopfstück führender Steg des Kopplungsstücks die Öffnungsnut durchgreift.

In einer bevorzugten Ausführungsform ist die Führungsschiene mit einer Basis verbunden und kragt über die Basis aus. Dabei sind Bauformen denkbar, bei denen die Führungsschiene fest mit der Basis verbunden ist und in ihrer Relativposition zur Basis unverändert bleibt. Aufgabe der Basis ist es insbesondere, die Führungsschiene zu stützen. Dafür kann die Basis sehr kompakt ausgebildet werden, wenn sie entsprechend schwer ausgestaltet wird, sodass die von ihr auskragende Führungsschiene die Basis nicht umkippen kann.

In einer bevorzugten Ausführungsform kann sich die Führungsschiene entlang der Längsachse der Führungsschiene relativ zur Basis bewegen, um in einer Betriebsposition von der Basis auszukragen. In dieser bevorzugten Ausführungsform ist die Basis in einer besonders bevorzugten Ausführungsform in etwa so lang wie die Führungsschiene. Dadurch kann, bei entsprechendem Gewicht der Basis ein Verkippen der Basis vermieden werden, selbst wenn die Führungsschiene in die am meisten auskragende Position ausgefahren wird. Es steht zu erwarten, dass aufgrund der Hebelgesetze eine längerbauende Basis leichter ausgeführt werden kann, als eine kompakt ausgeführte Basis, die auf geringem Raum allein aufgrund ihres Gewichts ein ausreichendes Gegenmoment zum Kippmoment der auskragenden Führungsschiene erzeugt. Da es gemäß einer besonders bevorzugten Ausführungsform vorgesehen ist, dass die Basis verfahrbar ausgestaltet wird, sind Ausführungsformen zu bevorzugen, die leichter bauen. Dabei ist es denkbar, dass die erfindungsgemäße Reinigungsvorrichtung den Umgebungsbedingungen, in denen sie eingesetzt werden soll, entsprechend aufgebaut wird. Ist seitlich des Rollenkühlofens nur geringer Platz vorhanden, so wird man die Basis kompakt bauen müssen, dabei aber gegebenenfalls höhere Eigengewichte der Basis in Kauf nehmen müssen. Ist seitlich von dem Rollenkühlofen ausreichend Platz vorhanden, so sind auch Ausführungsformen mit relativ langbauender Basis denkbar, beispielsweise Bauformen, bei denen die Basis von der Größenordnung her der Breite des Rollenkühlofens entspricht. Es ist in der Regel davon auszugehen, dass an der Seite des Rollenkühlofens Raum in der Größenordnung einer Breite einer Transportrolle vorgesehen ist, um den Ausbau der Transportrollen zu erlauben, der meist durch seitliches Herausziehen der Transportrollen erfolgt.

In einer bevorzugten Ausführungsform weist die Basis für die Führungsschiene eine Tragschiene auf, an der sich die Führungsschiene abstützen kann. Weist die Reinigungsvorrichtung gemäß einer bevorzugten Ausführungsform mehrere Führungsschienen auf, so weist die Basis in einer besonders bevorzugten Ausführungsform mehrere Tragschienen auf, vorzugsweise eine pro Führungsschiene. In einer bevorzugten Ausführungsform ist die Tragschiene als Hohlprofil mit einer Öffnungsnut ausgeführt, die sich insbesondere bevorzugt entlang der gesamten Länge der Tragschiene erstreckt.

In einer bevorzugten Ausführungsform weist die Führungsschiene ein Kopplungsstück auf, das die Öffnungsnut der Tragschiene durchgreift. Ein in einer bevorzugten Ausführungsform vorgesehenes Kopfstück am Kopplungsstück ist größer ausgestaltet als die Öffnungsnut und im inneren des Hohlprofils angeordnet. Das Kopfstück verhindert, dass das Kopplungsstück durch die Öffnungsnut herausgezogen werden kann. In einer bevorzugten Ausführungsform ist das Hohlprofil zumindest an einem Ende offen, so dass das Kopfstück an diesem Ende so in das Hohlprofil eingeführt werden kann, dass das Kopfstück in dem Hohlprofil angeordnet ist und ein zum Kopfstück führender Steg des Kopplungsstücks die Öffnungsnut durchgreift. In einer besonders bevorzugten Ausführungsform weist das Basis-seitige Ende der Führungsschiene zwei derartige Kopplungsstücke auf. Bei einer bevorzugten Ausführungsform mit zwei Führungsschienen und zwei Tragschienen ist am Basis-seitigen Ende der Führungsschienen in einer bevorzugten Ausführungsform ein Rahmen, vorzugsweise ein rechteckiger Rahmen mit insgesamt vier Kopplungsstücken vorgesehen, jeweils zwei in Flucht mit einer Führungsschiene. Insbesondere bevorzugt ist der Rahmen verschieblich relativ zu den Tragschienen ausgebildet.

In einer bevorzugten Ausführungsform weist die Lanze an ihrem Basis-seitigen Ende ein Kopplungsstück auf, das über eine Öffnungsnut in eine als Hohlprofil ausgebildete Tragschiene der Basis eingreift. Insbesondere bevorzugt weist dieses Kopplungsstück ein in dem Hohlprofil angeordnetes Kopfstück auf, das größer ist, als die Öffnungsnut und damit verhindert, dass das Kopplungsstück aus der Öffnungsnut gezogen werden kann.

In einer bevorzugten Ausführungsform weist die Reinigungsvorrichtung zwei Führungsschienen und zwei Tragschienen auf sowie eine auf den Tragschienen angeordnete, relativ zu den Tragschienen verschiebliche Brücke. Die Brücke weist insbesondere bevorzugt zwei Kopplungsstücke auf, wobei jeweils ein Kopplungsstück über eine Öffnungsnut in eine als Hohlprofil ausgebildete Tragschiene der Basis eingreift. Insbesondere bevorzugt weist das jeweilige Kopplungsstück ein in dem Hohlprofil angeordnetes Kopfstück auf, das größer ist als die Öffnungsnut und damit verhindert, dass das Kopplungsstück aus der Öffnungsnut gezogen werden kann. Die Brücke kann als Auflage für das Basis-seitige Ende der Lanze dienen. Insbesondere bevorzugt sind Befestigungsmittel, beispielsweise Schellen vorgesehen, mit denen die Lanze mit der Brücke verbunden werden kann.

In einer bevorzugten Ausführungsform ist ein Antrieb vorgesehen, der die Lanze relativ zur Führungsschiene verschiebt. Dabei ist der Antrieb in einer bevorzugten Ausführungsform insbesondere bevorzugt derart ausgebildet, dass er die Lanze inkrementell von einer Sprühposition zu einer weiteren verschieben kann und so die gesamte Oberfläche der Transportrolle durch inkrementelles Abstrahlen aufeinanderfolgender Oberflächenbereiche gereinigt werden kann.

In einer bevorzugten Ausführungsform weist die Basis Rollen auf und kann somit relativ zum Rollenkühlofen bewegt werden. Rollenkühlöfen weisen in der Regel seitlich angeordnete Klappen auf, die Zugang zum Inneren des Rollenkühlofens gestatten. Eine mit einer fahrbaren Basis ausgestattete Reinigungsvorrichtung kann zum Reinigen des Rollenkühlofens somit von einer Klappe zur nächsten Klappe bewegt werden und die Transportrollen reinigen, die von der jeweiligen, durch die jeweilige Klappe verschlossenen Öffnung erreichbar sind.

In einer bevorzugten Ausführungsform kann die Lanze um ihre Längsachse geschwenkt werden und dadurch die Strahlrichtung der Düse geändert werden. Dies vereinfacht das Ausrichten der Düse relativ zu der reinigenden Oberfläche der Transportrolle. Ferner erlaubt ein Verschwenken der Lanze das Reinigen von zwei nacheinander angeordneten Transportrollen, wie das vorstehend bereits beschrieben worden ist.

In einer bevorzugten Ausführungsform weist die Reinigungsvorrichtung eine Kamera auf. Insbesondere bevorzugt kann die Kamera an der Lanze angeordnet werden und mit der Lanze entlang der Oberfläche der Transportrolle bewegt werden. In einer alternativen Ausführungsform ist es denkbar, dass die Kamera an der Führungsschiene angeordnet ist und in einer besonders bevorzugten Ausführungsform relativ zur Führungsschiene verfahren werden kann, um die Oberfläche der Transportrolle entlang ihrer Längserstreckung zu untersuchen.

Das erfindungsgemäße Reinigungsverfahren zum Reinigen von Transportrollen in einem Rollenkühlofen einer Anlage zum Herstellen von Floatglas sieht das Erzeugen eines Strahls von Trockeneispellets und/oder Trockeneisschnee mittels einer Düse und das Aufbringen des Strahls auf die Oberfläche der Transportrolle vor. In einer bevorzugten Ausführungsform kann den Trockeneispellets und/oder dem Trockeneisschnee ein abrasives Reinigungsmittel, beispielsweise Glasperlen oder Sand beigefügt werden. In einer bevorzugten Ausführungsform werden jedoch nur Trockeneispellets und/oder Trockeneisschnee auf die Oberfläche der Transportrolle aufgestrahlt.

In einer bevorzugten Ausführungsform wird ein mit der Düse bestückter Fahrschlitten parallel zur Längsachse der Transportrolle bewegt. Dieser Fahrschlitten ist insbesondere bevorzugt die vorstehend im Rahmen der erfindungsgemäßen Reinigungsvorrichtung näher beschriebene Lanze.

In einer bevorzugten Ausführungsform wird der Fahrschlitten entlang einer Führungsschiene bewegt, wie dies vorstehend bereits im Zusammenhang mit der Lanze der erfindungsgemäßen Reinigungsvorrichtung beschrieben worden ist.

In einer bevorzugten Ausführungsform wird in dem Rollenkühlofen befindliches Floatglas von der Transportrolle während der Reinigung abgestützt. Das erfindungsgemäße Reinigungsverfahren erlaubt es nämlich, die Reinigung ohne eine Unterbrechung des Floatglasherstellungsprozesses durchzuführen.

Die erfindungsgemäße Reinigungsvorrichtung findet Einsatz beim Reinigen von Transportrollen in einem Rollenkühlofen einer Anlage zum Herstellen von Floatglas.

Bei der Herstellung von Floatglas entstehen auf den einzelnen Transportwalzen im sogenannten Rollenkühlofen während des Abkühlvorgangs über die gesamte Kühlstrecke starke Ablagerungen, die immer wieder zu zum Teil erheblichem Ausschuss führen. Diese Ablagerungen werden im laufenden Kühlprozess von allen Transportwalzen der gesamten Kühlstrecke mittels Trockeneisstrahlen beseitigt.

Die zum Teil starken Ablagerungen bei der Floatglasherstellung auf den Glas-Transportwalzen in einem Rollenkühlofen werden über die gesamte Transportwalzenbreite mittels Trockeneisstrahlen ohne Beschädigung weder der Transportwalzen noch des durch die Walzen transportierten Glases beseitigt.

Der Trockeneis-Reinigungsprozess findet während des laufenden Produktionsprozesses über eine in den Rollenkühlofen einzuführende Führungsschiene, über die ein mit einer Spezialtrockeneisdüse bestückter Fahrschlitten geführt wird, statt. Die Reinigung kann sowohl mit Trockeneispellets als auch mit Trockeneisschnee durchgeführt werden.

Das erfindungsgemäße Verfahren ermöglicht es, die Transportrollen im laufenden Produktionsprozess zu reinigen. Die Transportrollen behalten ihre Temperatur und bleiben ausgerichtet, wobei ihre Oberfläche nicht beschädigt wird. Damit erreicht das erfindungsgemäße Verfahren minimale Produktionsausfälle und eine maximale Lebensdauer der Transportrollen.

In einer bevorzugten Ausführungsform sind Stellmotoren vorgesehen, mit denen die Position der Lanze relativ zur Führungsschiene eingestellt werden kann, damit kann der Vorschub der Lanze entlang der Führungsschiene automatisiert werden. Ergänzend oder alternativ sind Stellmotoren vorgesehen, die die Position der Führungsschiene relativ zur Basis einstellen. Damit kann die Positionierung der Führungsschiene im Rollenkühlofen automatisiert werden.

In einer bevorzugten Ausführungsform weist die Lanze eine Kamera auf, mit der der Reinigungsfortschritt überwacht werden kann. Die Kamera ist insbesondere bevorzugt etwas beabstandet von der Düse und in einem Winkel zur Strahlrichtung der Düse angeordnet. Dadurch wird die Kamera nicht durch den Trockeneispellet-, bzw. Trockeneisschnee-Strahl verunreinigt, kann aber jedoch zugleich den Reinigungsfortschritt an der zu der jeweiligen Zeiteinheit gereinigten Transportrollenoberfläche überwachen.

In einer bevorzugten Ausführungsform weist der Strahl der Trockeneispellets, bzw. der Strahl des Trockeneisschnees einen Druck von 10 bis 12 bar auf, wenn er auf die Oberfläche der Transportrolle trifft.

Nachfolgend wird die Erfindung anhand einer lediglich Ausführungsformen der Erfindung darstellenden Zeichnungen näher erläutert.

Darin zeigen:
- Fig. 1: eine schematische Draufsicht von der Seite auf die erfindungsgemäße Reinigungsvorrichtung in einem geschnitten dargestellten Rollenkühlofen;
- Fig. 2: eine Schnittansicht auf die in den Rollenkühlofen verbrachte Führungsschiene mit der auf ihr abgestützten Lanze, wobei drei in Durchströmungsrichtung des Glases nacheinander angeordnete Transportrollen gezeigt werden;
- Fig. 3: eine schematische Seitenansicht eines Abschnitts einer Lanze der erfindungsgemäßen Reinigungsvorrichtung mit einem daran angeordneten Gleitstück;
- Fig. 4: eine schematische Draufsicht auf eine Lanze und eine Führungsschiene der erfindungsgemäßen Reinigungsvorrichtung, bei der die Verbindung der Lanze mit der Führungsschiene über ein Gleitstück dargestellt ist und
- Fig. 5: eine schematische Draufsicht auf zwei parallel zueinander angeordnete Führungsschienen einer erfindungsgemäßen Reinigungsvorrichtung.

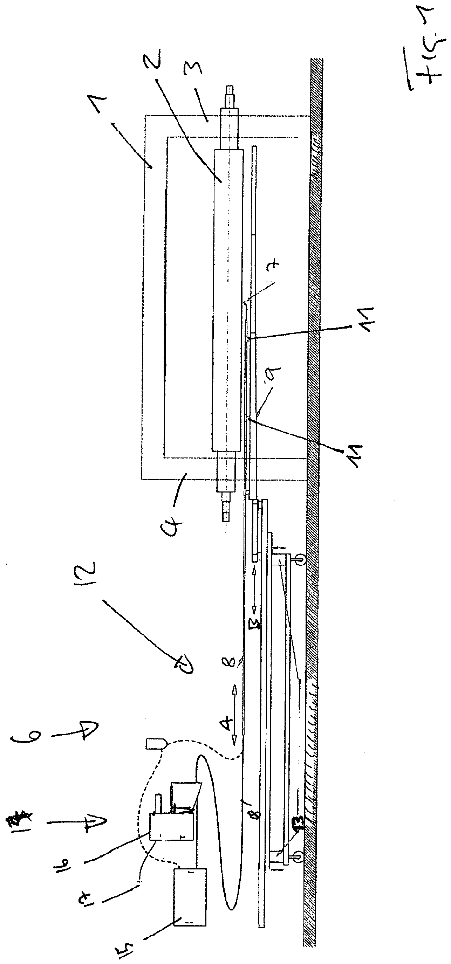

In Fig. 1 wird ein Rollenkühlofen 1 einer Anlage zum Herstellen von Floatglas gezeigt. Innerhalb des Rollenkühlofens 1 sind in Durchströmungsrichtung des Glases durch den Rollenkühlofen nacheinander angeordnete Transportrollen 2 vorgesehen. In der in Fig. 1 dargestellten Schnittansicht ist lediglich eine Transportrolle 2 zu erkennen. Die Durchströmungsrichtung des Glases durch den Rollenkühlofen 1 in der Darstellungsweise der Fig. 1 ist aus der Papierebene hinaus oder in die Papierebene hinein. Der Rollenkühlofen 1 weist eine dem Antrieb der Transportrollen 2 zugeordnete Seite 3 und eine freie Seite 4 auf.

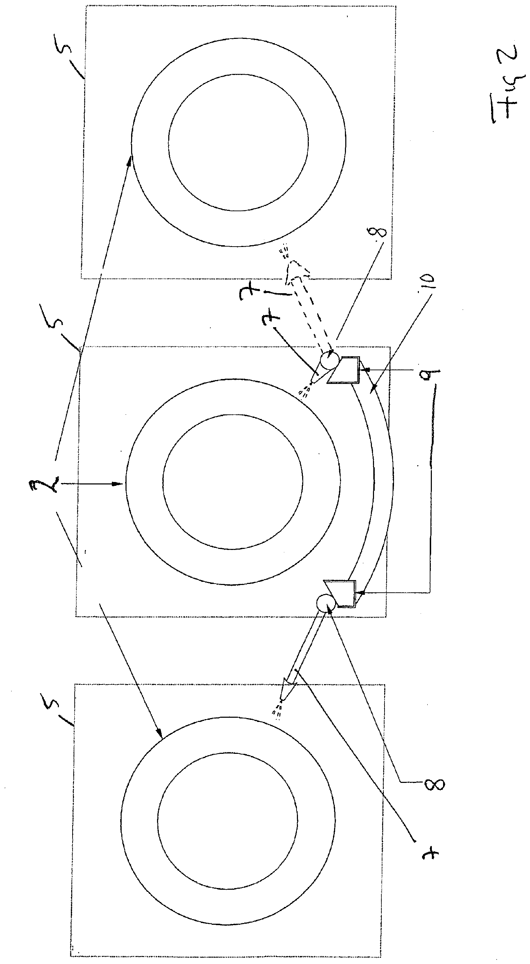

Die Fig. 2 zeigt eine Ansicht von der freien Seite 4 in den Rollenkühlofen 1 hinein. Dabei wird mit den gestrichelten Linien in Fig. 2 der Bereich von Öffnungen angedeutet, die an der Seitenwand des Rollenkühlofens 1 an seiner freien Seite 4 vorgesehen sind. Die Öffnungen sind durch Klappen verschließbar ausgebildet.

Die erfindungsgemäße Reinigungsvorrichtung 6 weist eine Düse 7 auf, die an einer Lanze 8 (Strahlrohr) angeordnet ist. In der Darstellung der Fig. 2 sind zwei Lanzen 8 mit Düsen 7 dargestellt, dabei wird bei der in Fig. 2 rechts dargestellten Lanze 8 mit Strichlinien die Lage einer weiteren Düse 7 dargestellt. Die mit Vollstrich an der rechten Lanze 8 dargestellte Düse 7 kann von der Lanze 8 entfernt werden, beispielsweise abgeschraubt werden und durch eine längere, rohrartige Düse (so wie sie mit Strichlinien in der Fig. 2 dargestellt ist) ersetzt werden. Danach wird die Lanze 8 wieder in den Rollenkühlofen eingeschoben und so um ihre Längsachse geschwenkt, dass die neu angebrachte, rohrförmige Düse 7 die in Fig. 2 mit Strichlinien gezeigte Position einnimmt.

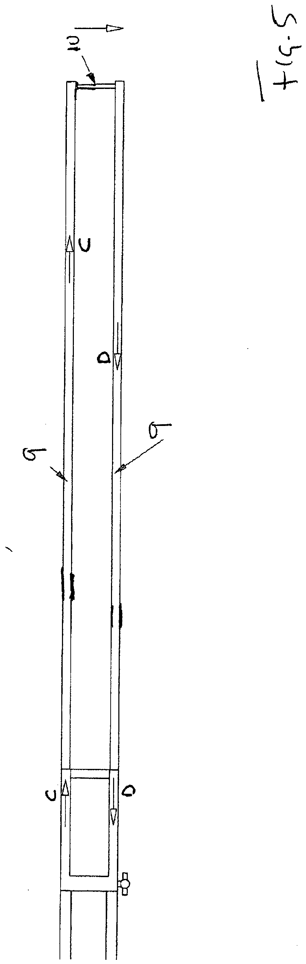

Die Lanze 8 stützt sich auf einer Führungsschiene 9 ab. Wie der Darstellung der Fig. 2 entnommen werden kann, ist die in diesem Ausführungsbeispiel dargestellte erfindungsgemäße Reinigungsvorrichtung mit zwei parallel zueinander verlaufenden Führungsschienen 9 ausgebildet. Diese werden entlang ihrer Längserstreckung über Verbindungsbögen 10 verbunden (vgl. Fig. 5), sodass eine rahmenartige Konstruktion entsteht. Die Verbindungsbögen 10 können für den Vor- und Rücklauf einer Wasserkühlung verwendet werden. Wie in Fig. 5 dargestellt dient die eine Führungsschiene 9 als Vorlauf (Pfeil C) und die parallel dazu angeordnete Führungsschiene 9 als Rücklauf (Pfeil D). Wie mit dem Doppelpfeil A in Fig. 1 dargestellt, ist die Lanze 8 relativ zur Führung entlang der Längsachse der Führungsschiene beweglich ausgebildet. Hierfür sind Gleitstücke 11 an der Lanze 8 angeordnet.

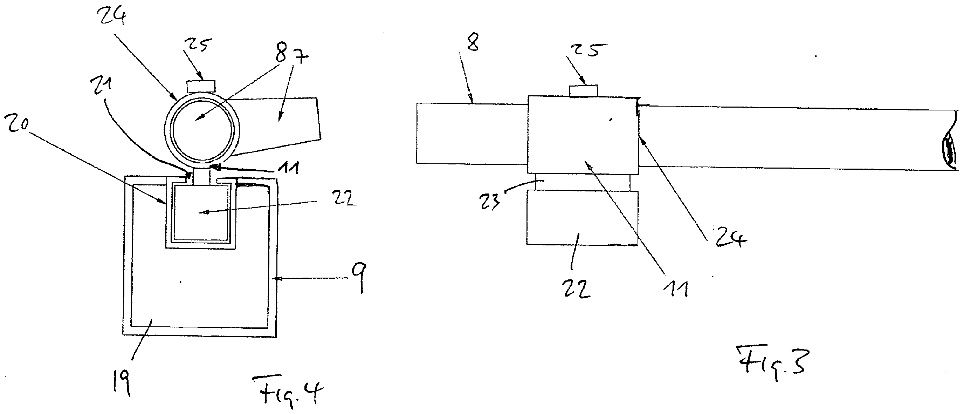

Wie aus Fig. 3 und 4 ersichtlich, ist die Führungsschiene 9 in doppelter Hinsicht als Hohlprofil ausgebildet. Zum einen ist in der Führungsschiene 9 ein Kanal 19 vorgesehen, der der Wasserkühlung der Führungsschiene 9 dient (vgl. Erläuterung zu Fig. 5). Ferner ist ein Hohlprofil 20 mit einer Öffnungsnut 21 ausgeführt, die sich entlang der gesamten Länge der Führungsschiene 9 erstreckt. Das Gleitstück (Kopplungsstück) 11 der Lanze 8 durchgreift die Öffnungsnut 20 der Führungsschiene 9. Ein Kopfstück 22 am Gleitstück 11 ist größer ausgestaltet als die Öffnungsnut 22 und im Inneren des Hohlprofils 20 angeordnet. Das Kopfstück 22 verhindert, dass das Gleitstück 11 durch die Öffnungsnut 21 herausgezogen werden kann. Das Hohlprofil ist an dem Basis-seitigen Ende offen, so dass das Kopfstück 22 an diesem Ende so in das Hohlprofil 20 eingeführt werden kann, dass das Kopfstück 22 in dem Hohlprofil 20 angeordnet ist und ein zum Kopfstück 22 führender Steg 23 des Kopplungsstücks die Öffnungsnut 20 durchgreift. Das Gleitstück 11 weist ferner eine Hülse 24 auf, die von der Lanze 8 durchgriffen wird. An der Hülse 24 ist eine Feststellschraube 25 vorgesehen, mit der die axiale und rotatorische Lage der Lanze 8 relativ zur Hülse 24 festgelegt werden kann.

Die erfindungsgemäße Reinigungsvorrichtung weist eine Basis 12 auf. Die Führungsschiene 9 ist mit der Basis 12 verbunden. Wie dem mit B gekennzeichneten Doppelpfeil in der Fig. 1 entnommen werden kann, ist die Führungsschiene 9 entlang der Längsachse der Führungsschiene 9 relativ zur Basis beweglich, um die Führungsschiene 9 in die in der Fig. 1 dargestellten Betriebsposition zu verbringen, in der die Führungsschiene von der Basis 12 auskragt.

Die Basis weist Mittel 13 zur Höheneinstellung der Lage der Führungsschiene relativ zum Boden auf. Da diese Mittel sowohl am vorderen als auch am hinteren Ende der Basis 12 vorgesehen sind, können sie sowohl dazu genutzt werden, um die Führungsschiene parallel zum Boden zu versetzen (die Höhe oder Tiefe einzustellen). Ebenso können diese Mittel durch unterschiedliches Einstellen dazu genutzt werden, um die Lage der Führungsschiene relativ zum Boden zu verschwenken.

In der in Fig. 2 dargestellten Ausführungsform sind zwei Lanze 8 vorgesehen. In einer bevorzugten Ausführungsform ist für jede Lanze 8 eine Fördervorrichtung für die über die jeweilige Düse 7 auszubringenden Trockeneispellets, bzw. über den dort auszubringenden Trockeneisschnee vorgesehen. Dies verhindert, dass sich der Austrag der Trockeneispellets, bzw. des Trockeneisschnees aus der einen Düse von dem Austrag von Trockeneispellets, bzw. Trockeneisschnee aus der anderen Düse beeinflussen lässt. Insbesondere können durch Vorsehen von jeweils einer Fördervorrichtung pro Lanze Druckschwankungen beim Austragen der Trockeneispellets, bzw. des Trockeneisschnees vermieden werden, wie sie beispielsweise entstehend würden, wenn die eine Lanze 8 abgeschaltet werden müsste, um in einen neue Position verschoben zu werden.

An der Basis 12 ist eine Fördervorrichtung für Trockeneispellets 14 vorgesehen. Diese weist eine Luftkompressor 15 auf. Ferner eine Vorrichtung 16 zum Erzeugen von Trockeneispellets. Dieser Vorrichtung 16 wird Kohlendioxid über eine Leitung 17 zugeführt. Die in der Vorrichtung 16 erzeugten Trockeneispellets werden in den vom dem Luftkompressor 15 erzeugten Luftstrom eingespeist und von diesem über einen Schlauch 18 in einen innenliegenden Kanal in der Lanze 8 eingespeist. Über den innenliegenden Kanal wird der die Trockeneispellets fördernde Luftstrom mit den von ihm geförderten Trockeneispellets zur Düse 7 geführt und dort in Form eines Strahls ausgebracht. In einer bevorzugten Ausführungsform kann dem Luftstrom in dem Schlauch 18 ein abrasives Reinigungsmittel, beispielsweise Sand oder Glasperlen über einen Schlauch 19 zugeführt werden, so dass durch den Luftstrom ein Gemisch aus abrasivem Reinigungsmittel und Trockeneispellets gefördert wird.

Zur Durchführung des erfindungsgemäßen Verfahrens wird eine Öffnung 5 an der freien Seite des Rollenkühlofens 1 geöffnet und die Führungsschiene 9 relativ zur Basis 12 entlang der Längsachse der Führungsschiene bewegt und zwar in den Rollenkühlofen 1 eingeschoben. In einer besonders bevorzugten Ausführungsform wird die Führungsschiene 9 bereits zu anfangs gänzlich in den Rollenkühlofen eingeschoben. Das erlaubt es, die Basis 12 zu stabilisieren und auch die Führungsschiene 9 relativ zur Basis zu fixieren, wobei diese Fixierung solange beibehalten werden kann, bis die Reinigungsarbeiten durch diese Öffnung 5 abgeschlossen sind. Danach wird die Lanze 8 relativ zur Führungsschiene 9 bewegt. Ziel ist es, dass die Lanze für eine vollständige Reinigung der Transportrolle zumindest einmal jeden Oberflächenabschnitt der Transportrolle angestrahlt hat. Ausgehend von diesem Ziel sind verschiedene Reinigungsstrategien denkbar. So kann in einer ersten Reinigungsstrategie die Lanze 8 so angeordnet werden, dass der aus der Düse 7 austretende Strahl von Trockeneispellets, bzw. Trockeneisschnee Oberflächenabschnitte der Transportrolle 2 an einem Ende der Transportrolle 2 anstrahlt. Nachdem diese Oberflächenbereiche hinreichend gereinigt wurden, wobei begünstigend hinzutritt, wenn die Transportrolle 2 währenddessen rotiert wird, sodass der Strahl den Umfang der Transportrolle an dieser Stelle reinigt. Ist die Transportrolle an dieser Stelle hinreichend gereinigt, so kann die Lanze 8 weiter entlang der Transportrolle verschoben werden und somit sukzessive jeder Umfangsbereich der Transportrolle 2 gereinigt werden. Dabei kann von der freien Seite 4 des Rollenkühlofens 1 gesehen - die Reinigung am entfernter liegenden Ende der Transportrolle (dem antriebsseitigen Ende der Transportrolle) begonnen werden und die Lanze 8 sukzessive aus dem Rollenkühlofen herausgezogen werden. Ebenso ist eine Verfahrensführung denkbar, bei der die Oberflächenabschnitte näher der freien Seite zunächst gereinigt werden und die Lanze 8 sukzessive in den Rollenkühlofen 1 eingeschoben wird. Eine alternative Reinigungsstrategie kann beinhalten, dass die Lanze zunächst so angeordnet wird, dass die Düse den mittigen Bereich der Transportrolle reinigt (etwas wie in der Fig. 1 dargestellt) und von dort aus weiter in den Rollenkühlofen hineingeschoben oder weiter aus dem Rollenkühlofen 1 hinausgezogen wird.

Anhand der Fig. 2 wird nun erläutert, wie mit einer einzigen Lanze 8 drei Transportrollen 2 gereinigt werden können. In einem ersten Verfahrensschritt wird die Lanze 8 an die Stelle der in der Fig. 2 links dargestellten Lanze 8 positioniert und wird die linke der drei Transportrollen mit einer rohrartig ausgebildeten Düse 7 reinigt. Dazu wird die Lanze 8 entlang der linken Führungsschiene 9 in die Papierebene hinein und aus der Papierebene hinaus bewegt. Ist die linke Transportrolle 2 reinigt, so wird die Lanze 8 aus dem Rollenkühlofen herausgenommen und sich auf der rechten Führungsschiene 9 abstützend in den Rollenkühlofen eingeführt. Mit der weiterhin an der Lanze angebrachten rohrförmigen Düse 7 kann die rechte der Transportrollen 2 gereinigt werden (vgl. die mit Strichlinien angeordnete Positionierung der röhrenförmigen Düse 7). Nachdem die rechte der drei Transportrollen 2 gereinigt worden ist, wird die Lanze 8 wiederum aus dem Rollenkühlofen 2 entnommen und die röhrenförmige Düse 7 durch eine kurze Düse (vgl. die mit Vollstrichen dargestellte Darstellung der rechten Lanze 8 mit ihrer Düse 7) ersetzt. Danach wird die Lanze 8 wiederum in den Rollenkühlofen 2 eingeführt, wobei sie sich auf der rechten Führungsschiene 9 abstützt. Die Lanze 8 wird so verschwenkt, dass die Düse 7 so ausgerichtet wird, wie mit Vollstrichen bei der rechten Lanze 8 in der Fig. 2 dargestellt. Daraufhin kann die mittlere der Transportrollen 2 gereinigt werden.

## Patentansprüche

1. Anlage zum Herstellen von Floatglas mit einem Rollenkühlofen (1) und Transportrollen (2) in dem Rollenkühlofen (1) **gekennzeichnet durch** eine Reinigungsvorrichtung für die Transportrollen (2) in dem Rollenkühlofen (1) der Anlage zum Herstellen von Floatglas, die eine Düse (7) zum Ausbringen von Trockeneispellets und/oder Trockeneisschnee aufweist.

2. Anlage nach Anspruch 1, **gekennzeichnet durch** einen Vorratsbehälter für Trockeneispellets und/oder Trockeneisschnee und/oder eine Vorrichtung zum Erzeugen von Trockeneispellets und/oder Trockeneisschnee.

3. Anlage nach einem der Ansprüche 1 oder 2, **dadurch gekennzeichnet, dass** die Düse (7) zum Ausbringen von Trockeneispellets und/oder Trockeneisschnee an einer Lanze (8) vorgesehen ist und innerhalb der Lanze (8) ein zu der Düse (7) führender Kanal vorgesehen ist, durch den die Trockeneispellets und/oder der Trockeneisschnee zu der Düse (7) gefördert werden kann.

4. Anlage nach Anspruch 3, **dadurch gekennzeichnet, dass** die Lanze (8) auf einer Führungsschiene (9) abgestützt ist und sich relativ zur Führungsschiene entlang der Längsachse der Führungsschiene (9) bewegen kann.

5. Anlage nach Anspruch 4, **dadurch gekennzeichnet, dass** die Führungsschiene (9) mit einer Basis (12) verbunden ist und entlang der Längsachse der Führungsschiene (9) bewegt werden kann, um in einer Betriebsposition von der Basis auszukragen.

6. Anlage nach einem der Ansprüche 3 bis 5, **dadurch gekennzeichnet, dass** die Lanze (8) um ihre Längsachse geschwenkt werden kann und dadurch die Strahlrichtung der Düse (7) geändert werden kann.

7. Verfahren zum Herstellen von Floatglas mit einer Anlage nach einem der Ansprüche 1 bis 7, **gekennzeichnet durch** das Erzeugen eines Strahls von Trockeneispellets und/oder Trockeneisschnee mittels einer Düse und Aufbringen des Strahls auf die Oberfläche der Transportrolle (2).

8. Verfahren nach Anspruch 7, **dadurch gekennzeichnet, dass** ein mit der Düse (7) bestückter Fahrschlitten parallel zur Längsachse der Transportrolle (2) bewegt wird.

9. Verfahren nach Anspruch 8, **dadurch gekennzeichnet, dass** der Fahrschlitten entlang einer Führungsschiene (9) bewegt wird.

10. Verfahren nach einem der Ansprüche 7 bis 9, **dadurch gekennzeichnet, dass** während der Reinigung in dem Rollenkühlofen (1) befindliches Floatglas von der Transportrolle (2) abgestützt wird.

## Claims

1. Plant for producing float glass with an annealing lehr (1) and transport rollers (2) in the annealing lehr (1), **characterised by** a cleaning device for the transport rollers (2) in the annealing lehr (1) of the plant for producing float glass, which has a nozzle (7) for the output of dry ice pellets and/or dry ice snow.

2. Plant according to claim 1, **characterised by** a storage container for dry ice pellets and/or dry ice snow and/or a device for generating dry ice pellets and/or dry ice snow.

3. Plant according to one of the claims 1 or 2, **characterised in that** the nozzle (7) for the output of dry ice pellets and/or dry ice snow is envisaged on a lance (8) and a channel leading to the nozzle (7) is envisaged inside the lance (8), through which the dry ice pellets and/or the dry ice snow can be conveyed to the nozzle (7).

4. Plant according to claim 3, **characterised in that** the lance (8) is supported on a guide rail (9) and can move relative to the guide rail along the longitudinal axis of the guide rail (9).

5. Plant according to claim 4, **characterised in that** the guide rail (9) is connected with a base (12) and can be moved along the longitudinal axis of the guide rail (9) in order to overhang the base in an operating position.

6. Plant according to one of the claims 3 to 5, **characterised in that** the lance (8) can be pivoted around its longitudinal axis and the jet direction of the nozzle (7) can be changed in this way.

7. Method for producing float glass with a plant according to one of the claims 1 to 7, **characterised by** the generation of a jet of dry ice pellets and/or dry ice snow by means of a nozzle and application of the jet to the surface of the transport roller (2).

8. Method according to claim 7, **characterised in that** a moving carriage equipped with the nozzle (7) is moved parallel to the longitudinal axis of the transport roller (2).

9. Method according to claim 8, **characterised in that** the moving carriage is moved along the guide rail (9).

10. Method according to one of the claims 7 to 9, **characterised in that** float glass located in the annealing lehr (1) during cleaning is supported by the transport roller (2).

## Revendications

1. Installation destinée à la fabrication de verre flotté avec un four d'étenderie (1) et des rouleaux de transport (2) dans le four d'étenderie (1) **caractérisée** en un dispositif de nettoyage des rouleaux de transport (2) dans le four d'étenderie (1) de l'installation destinée à fabriquer du verre flotté qui présente une buse (7) pour projeter des pellets de glace carbonique et/ou de la neige carbonique.

2. Installation selon la revendication 1, **caractérisée** en un réservoir de stockage de pellets de glace carbonique et/ou de neige carbonique et/ou en un dispositif pour produire des pellets de glace carbonique et/ou de la neige carbonique.

3. Installation selon la revendication 1 ou 2, **caractérisée en ce que** la buse (7) pour projeter des pellets de glace carbonique et/ou de la neige carbonique est prévue sur une lance (8) et qu'un canal conduisant à la buse (7) est prévu en dessous de la lance (8) à travers lequel les pellets de glace carbonique et/ou de la neige carbonique peuvent être acheminés vers la buse (7).

4. Installation selon la revendication 3, **caractérisée en ce que** la lance (8) est soutenue sur un rail de guidage (9) et peut bouger par rapport au rail de guidage le long de l'axe longitudinal du rail de guidage (9).

5. Installation selon la revendication 4, **caractérisée en ce que** le rail de guidage (9) est raccordé à une base (12) et peut bouger le long de l'axe longitudinal du rail de guidage (9) afin de dépasser la base en une position de service.

6. Installation selon l'une quelconque des revendications 3 à 5, **caractérisée en ce que** la lance (8) peut être pivotée autour de son axe longitudinal et **en ce que**, par conséquent, la direction du jet de la buse (7) peut être modifiée.

7. Procédé de fabrication de verre flotté avec une installation selon l'une quelconque des revendications 1 à 7, caractérisé en la génération d'un jet de pellets de glace carbonique et/ou de neige carbonique à l'aide d'une buse et en l'application du jet sur la surface du rouleau de transport (2).

8. Procédé selon la revendication 7, **caractérisé en ce qu'**un chariot de déplacement équipé d'une buse (7) est déplacé parallèlement à l'axe longitudinal du rouleau de transport (2).

9. Procédé selon la revendication 8, **caractérisé en ce que** le chariot de déplacement est déplacé le long d'un rail de guidage (9).

10. Procédé selon l'une quelconque des revendications 7 à 9, **caractérisé en ce que** le verre flotté se trouvant dans le four d'étenderie (1) est porté par le rouleau de transport (2) pendant le nettoyage.
